# FASCICULE DE BREVET EUROPEEN

(11) **EP 2 445 801 B1**
(45) Date de publication et mention de la délivrance du brevet: **19.08.2015**
(21) Numéro de dépôt: 10726494.7
(22) Date de dépôt: 22.06.2010
(51) Int. Cl.: C04B 26/04, C04B 40/06, C04B 103/00, C04B 111/00, B65D 65/46

(54) **CONTENEUR HYDROSOLUBLE, SON PROCEDE DE FABRICATION ET SON UTILISATION POUR LA FABRICATION D'UN CIMENT**
WASSERLÖSLICHER BEHÄTER, HERSTELLUNGSVERFAHREN DAFÜR UND SEINE VERWENDUNG ZUR HERSTELLUNG VON ZEMENT
WATER-SOLUBLE CONTAINER, METHOD FOR MANUFACTURING SAME, AND USE THEREOF FOR PRODUCING CEMENT

(30) Priorité: 22.06.2009 FR 0903016
(43) Date de publication de la demande: 02.05.2012
(73) Titulaire: Sika Technology AG, 6340 Baar (CH); Dexel, 30560 Saint Hilaire de Brethmas (FR)
(72) Inventeur: BURGALS, Frédéric, F-30110 Le Pradel (FR); THOMAS, Vincent, F-30340 Saint Privat des Vieux (FR)
(74) Mandataire: Sika Patent Attorneys
(86) Numéro de dépôt international: PCT/EP2010/058756
(87) Numéro de publication internationale: WO 2010/149633

(56) Documents cités:
- DE-C1- 4 214 540
- US-A- 5 120 367
- US-A- 5 928 741
- US-B1- 6 306 210

## Description

### DOMAINE TECHNIQUE DE L'INVENTION

L'invention se rapporte notamment au domaine de la fabrication du béton à partir d'un mélange de granulats agglomérés par un liant hydraulique tel que du ciment, et dans lequel un additif est incorporé.

Plus généralement l'invention se rapporte au conditionnement de tout produit solide, notamment pulvérulent, qui doit être ajouté et dispersé en quantité dosée dans un milieu comprenant notamment une solution aqueuse ou formée avec tout autre solvant.

### ETAT DE LA TECHNIQUE ANTERIEURE

Dans le document EP 1 421 039 on décrit un sac utilisé comme emballage de ciment en poudre ; le sac peut être réalisé avec une matière thermoplastique et soluble en milieu basique de sorte qu'il libère le ciment et les adjuvants qu'il contient lorsqu'il est introduit et mélangé avec les granulats et l'eau pour former un béton.

Le document JP10058430 A2 décrit un emballage hydrosoluble renfermant un adjuvant en poudre, qui est totalement incorporable dans un mélangeur pendant la fabrication du béton. Ainsi une quantité dosée d'adjuvant peut être incorporée au béton.

Dans le document DE4214540C, des fibres plastiques sont emballées dans un sac poreux soluble dans l'eau, préférentiellement réalisé avec une matière à base de polyvinylalcool. Ces fibres sont utilisées comme additifs pour le béton ou le mortier. Il est indiqué un temps d'environ 6 minutes pour le mélange des fibres avec les granulats et le ciment. La dissolution des fibres dans le mélange dure environ 1 minute. Cette solution nécessite donc une immersion pendant une durée assez longue avant d'obtenir la dissolution complète des fibres plastiques, ce qui pose un problème de latence.

Le brevet US 5 120 367 concerne un additif contenu dans un emballage hydrosoluble réalisé avec une matrice à base de polyvinylalcool. Le dosage de cet additif qui peut être de toute nature et composition est ainsi globalement maîtrisé. Cependant les emballages décrits dans ce document doivent être stockés dans des conteneurs spécifiques afin de les protéger notamment vis-à-vis de l'humidité avant leur utilisation. Cette solution induit donc un coût supplémentaire.

**Le brevet** US 5,928,741 **décrit un conteneur dont la paroi délimite un volume interne hermétiquement clos susceptible de contenir au moins un additif sec pour béton dont la paroi est au moins partielle rigide et poreuse.**

**Le brevet** US 5,120,364 **décrit un conteneur hydrosoluble dont la paroi délimite un volume interne hermétiquement clos susceptible de contenir au moins un additif sec pour béton.**

**Le brevet** US 6,306,210 **se rapporte à une méthode d'introduction d'un inhibiteur de corrosion migrateur dans du ciment.**

**Le brevet** DE 42 14 540 **décrit des sacs hydrosolubles comprenant des additifs pour béton et qui se dissolvent au cours du mélange avec le béton.**

**Aucun de ces documents ne décrit ni ne suggère un conteneurs simple d'utilisation dont la paroi est au moins partiellement rigide et qui se dissout quasi-instantanément en milieu aqueux.**

Bien entendu ces emballages ont un coût en eux-mêmes, parfois non négligeable.

En outre lorsque les emballages ne sont pas rigides, ils sont difficiles à stocker, voire présentent une certaine fragilité. Pour certains ils ne supportent pas une longue durée de stockage et ils peuvent se dégrader ou se détériorer pendant leur stockage ou leur transport si celui-ci excède un certain temps ou en cas de conditions d'entreposage dans des conditions de températures ou pressions non contrôlées.

Par ailleurs les conteneurs souples de l'art antérieur ont tendance à coller, voire à se dégrader dans une atmosphère humide ; l'invention évite ce problème car la paroi du conteneur est essentiellement constitué du granulat sableux (environ 98 %) ; le liant hydrosoluble n'en constitue qu'un très faible pourcentage (environ 2 %).

Il existe aussi des tablettes compactes formées de grains d'additifs compactés et liés ensemble par un liant. Le problème de ce type de produits est la durée nécessaire à sa dissolution complète dans un milieu aqueux. Il est en effet nécessaire d'attendre que l'eau entre en contact avec la totalité du liant, même le plus à l'intérieur de la tablette.

### EXPOSE DE L'INVENTION

L'invention vise à remédier aux problèmes techniques posés par l'art antérieur et notamment à proposer une solution de substitution simple, fiable, peu coûteuse et d'une réactivité améliorée.

Dans ce but selon un premier aspect, l'invention concerne un conteneur hydrosoluble dont la paroi délimite un volume interne hermétiquement clos, susceptible de contenir au moins un additif sec. Selon l'invention le conteneur est au moins partiellement rigide et sa paroi est constituée d'un matériau comprenant au moins un granulat aggloméré par un liant hydrosoluble, **ledit matériau constitutif de ladite paroi au moins partiellement rigide comprenant 98 % de sable et 2 % de liant hydrosoluble.**

Ainsi, non seulement la paroi est rigide mais en outre elle est poreuse de sorte que, comme il sera explicité plus loin, le temps de dissolution du conteneur dans un milieu aqueux est très faible.

Dans le cas d'un mélange pour former un béton ou un mortier, le conteneur selon l'invention est donc totalement inerte puisque formé uniquement avec les constituants du béton ou du mortier. Il peut contenir de nombreux ingrédients et/ou additifs chacun en quantité donnée et prédéterminée.

De façon préférée, le granulat sableux présente une granulométrie comprise entre 0,1 mm et 1,5 mm.

Le liant hydrosoluble peut comprendre un polyvinylalcool.

Avantageusement l'additif peut être constitué de particules et/ou de fibres.

Selon un mode de réalisation de l'invention, ladite paroi **au moins partiellement** rigide définit une enveloppe cylindrique.

L'invention vise en outre un procédé de fabrication d'un conteneur hydrosoluble comprenant les étapes suivantes : formuler une composition de matériau comprenant au moins un granulat et un liant hydrosoluble ;former un conteneur au moins partiellement rigide à partir de ladite composition , délimitant intérieurement un volume libre et présentant au moins une ouverture ;introduire dans ledit volume intérieur à travers ladite ouverture une quantité donnée d'un additif sec pour béton ;obturer de façon étanche ladite ouverture.

Favorablement, on forme ladite composition de matériau en mélangeant environ 98 % de sable silice et environ 2 % d'un liant hydrosoluble.

Plus précisément, on forme partiellement ledit conteneur rigide par moulage ou par excavation.

Dans le cas où l'on forme partiellement ledit conteneur par moulage, on réalise les étapes suivantes: on introduit la composition dans un réceptacle d'une presse, d'une forme donnée ; on presse ladite composition dans le réceptacle à l'aide de ladite presse ; on chauffe si nécessaire ledit réceptacle. Cette dernière étape est facultative en ce sens qu'elle permet de raccourcir le temps de solidification du conteneur.

L'invention a en outre pour objet l'utilisation d'un conteneur hydrosoluble dont la paroi délimite un volume interne hermétiquement clos susceptible de contenir au moins un additif sec pour béton, **dont la paroi est au moins partiellement rigide et poreuse et est constituée d'un matériau comprenant au moins un granulat sableux aggloméré par un liant hydrosoluble,** pour la fabrication d'un béton par mélange d'un granulat sableux et d'un ciment selon laquelle on introduit ledit conteneur pendant ledit mélange de sorte que l'additif sec pour béton initialement contenu dans le conteneur se trouve incorporé dans le béton par dissolution de sa paroi.

Ce mode d'utilisation est extrêmement simple, fiable car au final la quantité d'additif introduite est parfaitement maîtrisée et son coût est faible.

De plus l'intervention humaine est limitée à l'introduction d'un ou de plusieurs conteneurs dans le mélangeur à béton, de sorte que toute erreur dans la manipulation et/ou le dosage est quasi impossible. L'invention apporte donc plusieurs avantages considérables vis-à-vis des systèmes connus.

### DESCRIPTION DETAILLEE D'UN MODE DE REALISATION

D'une façon générale l'invention a trait à l'introduction dosée, maîtrisée et rapide d'une quantité de produit pulvérulent dans un environnement aqueux.

Selon un mode préféré de réalisation de l'invention, il s'agit d'introduire une quantité dosée d'un additif ou autre produit pulvérulent et/ou fibreux dans un béton en formation, plus précisément pendant le mélange aqueux d'un granulat et d'un liant, de façon simple, précise et rapide.

Selon l'un des aspects de l'invention, il est envisagé un conteneur hydrosoluble dont une paroi délimite un volume interne hermétiquement clos susceptible de protéger et de contenir au moins un additif, préférentiellement pulvérulent. Le conteneur en question est au moins partiellement rigide et sa paroi rigide est constituée d'un matériau comprenant au moins un granulat aggloméré par un liant hydrosoluble, **ledit matériau constitutif de ladite paroi au moins partiellement rigide comprenant 98 % de sable et 2 % de liant hydrosoluble.**

Concernant le granulat, une granulométrie comprise entre 0,1 mm et 1,5 mm est préférée.

En outre selon un mode préféré de réalisation de l'invention, le matériau constitutif de la paroi rigide comprend environ 98 % de sable et environ 2 % de liant hydrosoluble sous la forme d'une résine. Une telle composition permet au sable d'être aisément mis en forme notamment par moulage. On peut notamment envisager de former un tel matériau dans des moules de formes et dimensions variées ; des applications diverses peuvent ainsi être envisagées.

Il est important que la paroi rigide présente une certaine épaisseur et une certaine porosité. Les grains qui la constituent présentent entre eux des contacts ponctuels au niveau desquels un liant hydrosoluble tel qu'un polyvinylalcool est déposé. Des espaces vides existent entre les contacts ponctuels de sorte que dès que la paroi est en contact avec un milieu aqueux, l'eau entre très rapidement en contact avec le liant hydrosoluble, entraînant la dissolution quasi immédiate de la paroi rigide du conteneur.

Le conteneur selon l'invention peut renfermer un ou plusieurs additifs dont la nature et la quantité sont prédéterminées par l'homme de métier au moment du remplissage en fonction des besoins et des applications choisies.L'additif peut être pulvérulent, sous forme de particules et/ou fibreux. Une très grande latitude est donc laissée au fabriquant ainsi qu'à l'utilisateur pour le conditionnement de l'additif.

Concernant la forme du conteneur et plus spécifiquement celle de sa paroi rigide, celle-ci peut être avantageusement cylindrique. Son volume intérieur est hermétique et clos grâce à deux opercules circulaires qui sont eux-mêmes hydrosolubles.

On peut aussi concevoir un disque d'extrémité moulé avec une paroi latérale cylindrique pour former un fond, de même composition que ladite paroi latérale. A l'intérieur de ce conteneur en forme de pot, on verse un ou plusieurs additifs dont la nature et la quantité sont parfaitement connues et dosées. Puis on referme le conteneur au moyen d'un disque réalisé soit avec la même matière que ledit conteneur cylindrique soit au moyen d'une autre matière hydrosoluble compatible avec celle du conteneur.

Bien entendu, d'autres formes sont envisageables pour le conteneur : de section polygonale, en tonneau, sphérique.

D'une façon générale, le procédé de fabrication d'un conteneur selon l'invention comprend les étapes suivantes :
- formuler une composition de matériau comprenant au moins un granulat et un liant hydrosoluble ;
- former un conteneur au moins partiellement rigide à partir de ladite composition, délimitant intérieurement un volume libre et présentant au moins une ouverture ;
- introduire dans ledit volume intérieur à travers ladite ouverture une quantité donnée d'un additif **sec pour béton ;**
- obturer de façon étanche ladite ouverture.

Dans le cas où le conteneur est réalisé par moulage, les principales étapes de sa réalisation consistent à : introduire la composition à base de granulat et de liant dans une matrice associée à une presse, présentant une forme donnée et dotée d'au moins une ouverture; comprimer ladite composition dans ledit réceptacle à l'aide de ladite presse ; chauffer le réceptacle si nécessaire notamment si l'on souhaite accélérer la rigidification de la composition.

Pour finaliser la fabrication dudit conteneur, on procède comme indiqué ci-avant, à savoir : on introduit un ou plusieurs additifs en quantité dosée à l'intérieur du conteneur via la ou les ouvertures, puis on obture la ou les ouvertures de façon étanche. Tout moyen ou matière hydrosoluble identique ou différente de celle de la la paroi peut assurer l'obturation du conteneur.

En fonction des applications envisagées, il est possible de réaliser le conteneur par excavation.

Dans ce cas, on forme un bloc plein et compact constitué d' un granulat et d'un liant, puis on le creuse à l'aide d'un outil approprié afin d'obtenir une paroi extérieure rigide dont le volume intérieur est ensuite rempli d'un additif. Finalement on obture l'ouverture encore présente dans la paroi rigide, à l'aide d'un élément hydrosoluble.

Concernant la fabrication du béton par exemple, un tel conteneur est introduit directement dans le malaxeur où il est donc mélangé avec les agrégats et l'eau en quantité appropriée. Dès que le conteneur entre en contact avec l'eau présente dans le mélange, le liant hydrosoluble qui le constitue se dissout dans le mélange. Une destruction quasi instantanée du conteneur rigide est donc obtenue, accompagnée du mélange intime du ou des additifs qu'il renfermait initialement.

Cette opération de dilution est très rapide, de l'ordre d'une minute maximum. A titre de comparaison dans les techniques antérieures connues , un délai de quelques minutes (cinq à six) était nécessaire. Le raccourcissement de ce délai de destruction et de dilution constitue un avantage technique non négligeable.

Par ailleurs le fait que le conteneur soit au moins partiellement rigide permet de le stoker plus facilement notamment par gerbage. A priori, il ne nécessite pas de moyen de renfort spécifique relativement à sa tenue mécanique. Plusieurs conteneurs peuvent ainsi être juxtaposés, côte à côte ou les uns au-dessus des autres sans risque d'affaissement ni d'endommagement.

Leur stockage et leur transport ne posent pas de difficultés.

En phase de stockage la présence dans l'atmosphère d'une humidité ambiante n'est pas en soi suffisante pour provoquer la destruction du conteneur qui conserve une rigidité permettant de préserver sa fonction de conditionnement.

De plus les matériaux constitutifs du conteneur selon l'invention sont peu onéreux car issus de matières premières telles que du sable.

Dans le cas de l'application du conteneur à un béton ce sont les éléments constitutifs du béton lui-même.

Comme déjà énoncé, le ou les additifs sont librement choisis par le fabricant. Il peut être intéressant de choisir un pigment comme additif afin de colorer le mélange dans lequel le conteneur est introduit.

## Revendications

1. Conteneur hydrosoluble - dont la paroi délimite un volume interne hermétiquement clos susceptible de contenir au moins un additif sec pour béton-dont la paroi est au moins partiellement rigide et poreuse et est constituée d'un matériau comprenant au moins un granulat sableux aggloméré par un liant hydrosoluble, **caractérisé en ce que** le matériau constitutif de ladite paroi au moins partiellement rigide comprend 98 % de sable et 2 % de liant hydrosoluble.

2. Conteneur selon la revendication 1, dans lequel le granulat sableux présente une granulométrie comprise entre 0,1 mm et 1,5 mm.

3. Conteneur selon l'une quelconque des revendications précédentes, dans lequel le liant hydrosoluble comprend un polyvinylalcool.

4. Conteneur selon l'une quelconque des revendications précédentes, dans lequel l'additif sec pour béton est constitué de particules et/ou de fibres.

5. Conteneur selon l'une quelconque des revendications précédentes, dans lequel ladite paroi au moins partiellement rigide définit une enveloppe cylindrique.

6. Procédé de conditionnement dans un conteneur hermétique hydrosoluble d'au moins un additif sec pour béton comprenant les étapes consistant à :
- formuler une composition de matériau comprenant au moins un granulat sableux et un liant hydrosoluble ;
- former un conteneur au moins partiellement rigide et poreux à partir de ladite composition en délimitant intérieurement un volume libre présentant au moins une ouverture ;
- introduire dans ledit volume intérieur à travers ladite ouverture une quantité donnée de l'additif sec pour béton ;
- obturer de façon étanche ladite ouverture.

7. Procédé selon la revendication 7, **caractérisé en ce que** l'on forme ladite composition en mélangeant 98 % de sable silice et 2 % d'un liant hydrosoluble.

8. Procédé selon l'une quelconque des revendications 6 ou 7, dans lequel on forme partiellement ledit conteneur par moulage.

9. Procédé selon l'une des revendications 6 ou 7, dans lequel on forme ledit conteneur par excavation en creusant intérieurement un bloc de matériau plein.

10. Procédé selon la revendication 8, dans lequel le moulage du conteneur comprend les étapes consistant à :
- introduire la composition de matériau dans le réceptacle d'une presse de forme donnée ;
- comprimer ladite composition dans le réceptacle à l'aide de ladite presse ;
- chauffer si nécessaire ledit réceptacle.

11. Utilisation d'un conteneur hydrosoluble dont la paroi délimite un volume interne hermétiquement clos susceptible de contenir au moins un additif sec pour béton, dont la paroi est au moins partiellement rigide et poreuse et est constituée d'un matériau comprenant au moins un granulat sableux aggloméré par un liant hydrosoluble, pour la fabrication d'un béton par mélange d'un granulat sableux et d'un ciment **caractérisé en ce qu'**on introduit ledit conteneur dans ledit mélange de sorte que la quantité d'additif sec pour béton initialement contenu dans le conteneur se trouve incorporée dans le béton par dissolution de sa paroi.

12. Utilisation du conteneur selon la revendication 11, dans laquelle le granulat sableux présente une granulométrie comprise entre 0,1 mm et 1,5 mm.

13. Utilisation du conteneur selon la revendication 11 ou 12, dans laquelle le matériau constitutif de ladite paroi au moins partiellement rigide comprend 98 % de sable et 2 % de liant hydrosoluble.

14. Utilisation du conteneur selon l'une quelconque des revendications 11 à 13, dans laquelle le liant hydrosoluble comprend un polyvinylalcool.

15. Utilisation du conteneur selon l'une quelconque des revendications 11 à 14, dans laquelle l'additif sec pour béton est constitué de particules et/ou de fibres.

## Patentansprüche

1. Wasserlöslicher Behälter - dessen Wand ein hermetisch geschlossenes inneres Volumen definiert, das mindestens einen Trockenzusatzstoff für Beton enthalten kann - dessen Wand mindestens teilweise starr und porös ist und aus einem Material besteht, das mindestens einen Sandzuschlag beinhaltet, der von einem wasserlöslichen Bindemittel gebunden wird, **dadurch gekennzeichnet, dass** das Material, aus dem die mindestens teilweise starre Wand besteht, 98 % Sand und 2 % wasserlösliches Bindemittel beinhaltet.

2. Behälter nach Anspruch 1, wobei der Sandzuschlag eine Korngröße zwischen 0,1 mm und 1,5 mm aufweist.

3. Behälter nach einem der vorhergehenden Ansprüche, wobei das wasserlösliche Bindemittel einen Polyvinylalkohol beinhaltet.

4. Behälter nach einem der vorhergehenden Ansprüche, wobei der Trockenzusatzstoff für Beton aus Partikeln und/oder Fasern besteht.

5. Behälter nach einem der vorhergehenden Ansprüche, wobei die mindestens teilweise starre Wand ein zylindrisches Gehäuse definiert.

6. Verfahren zum Verpacken von mindestens einem Trockenzusatzstoff für Beton in einem wasserlöslichen verschlossenen Behälter, beinhaltend die Schritte bestehend aus:
- Formulieren einer Materialzusammensetzung, die mindestens einen Sandzuschlag und ein wasserlösliches Bindemittel beinhaltet;
- Bilden eines mindestens teilweise starren und porösen Behälters aus der Zusammensetzung während ein freies Volumen im Inneren mit mindestens einer Öffnung definiert wird;
- Einführen einer vorbestimmten Menge des Trockenzusatzstoffs für Beton in das innere Volumen durch die Öffnung;
- dichtes Verschließen der Öffnung.

7. Verfahren nach Anspruch 7, **dadurch gekennzeichnet, dass** die Zusammensetzung durch Mischen von 98 % Quarzsand und 2 % wasserlöslichem Bindemittel gebildet wird.

8. Verfahren nach einem der Ansprüche 6 und 7, wobei der Behälter teilweise durch Gießen hergestellt wird.

9. Verfahren nach einem der Ansprüche 6 und 7, wobei der Behälter durch Aushub durch Aushöhlen eines massiven Materialblocks im Inneren gebildet wird.

10. Verfahren nach Anspruch 8, wobei das Formen des Behälters die folgenden Schritte beinhaltet, bestehend aus:
- Einführen der Materialzusammensetzung in den Aufnahmebehälter einer Presse einer vorgegebenen Form;
- Komprimieren der Zusammensetzung in dem Aufnahmebehälter unter Verwendung der Presse;
- Erhitzen des Aufnahmebehälters, wenn nötig.

11. Verwendung eines wasserlöslichen Behälters, dessen Wand ein geschlossenes inneres Volumen definiert, das mindestens einen Trockenzusatzstoff für Beton enthalten kann, dessen Wand mindestens teilweise starr und porös ist und aus einem Material besteht, das mindestens einen Sandzuschlag beinhaltet, der von einem wasserlöslichen Bindemittel gebunden wird, zur Herstellung eines Betons durch Mischen eines Sandzuschlags und eines Zements, **dadurch gekennzeichnet, dass** der Behälter in die Mischung in einer Weise eingeführt wird, dass die Menge an Trockenzusatzstoff für Beton, die zunächst in dem Behälter gehalten wird, in den Beton durch Auflösung seiner Wand aufgenommen wird.

12. Verwendung des Behälters nach Anspruch 11, wobei der Sandzuschlag eine Korngröße zwischen 0,1 mm und 1,5 mm aufweist.

13. Verwendung des Behälters nach Anspruch 11 oder 12, wobei das Material, aus dem die mindestens teilweise starre Wand besteht, 98 % Sand und 2 % wasserlösliches Bindemittel beinhaltet.

14. Verwendung des Behälters nach einem der Ansprüche 11 bis 13, wobei das wasserlösliche Bindemittel einen Polyvinylalkohol beinhaltet.

15. Verwendung des Behälters nach einem der Ansprüche 11 bis 14, wobei der Trockenzusatzstoff für Beton aus Partikeln und/oder Fasern besteht.

## Claims

1. Water-soluble container - whose wall defines a hermetically closed internal volume capable of containing at least one dry additive for concrete - whose wall is at least partially rigid and porous and is made up of a material including at least one sand aggregate bonded by a water-soluble binder, **characterized in that** the material constituting said at least partially rigid wall includes 98% sand and 2% of a water-soluble binder.

2. Container according to Claim 1, in which the sand aggregate has a particle size between 0.1 mm and 1.5 mm.

3. Container according to either of the preceding claims, in which the water-soluble binder includes a polyvinyl alcohol.

4. Container according to any one of the preceding claims, in which the dry additive for concrete is made up of particles and/or fibers.

5. Container according to any one of the preceding claims, in which said at least partially rigid wall defines a cylindrical casing.

6. Method for packaging at least one dry additive for concrete in a water-soluble sealed container, including the steps consisting in:
- formulating a composition of material including at least one sand aggregate and a water-soluble binder;
- forming an at least partially rigid and porous container from said composition while defining a free volume inside with at least one opening;
- introducing a given quantity of the dry additive for concrete into said interior volume through said opening;
- tightly sealing said opening.

7. Method according to Claim 7, **characterized in that** said composition is formed by mixing 98% silica sand and 2% of a water-soluble binder.

8. Method according to either of Claims 6 and 7, in which said container is formed partially by molding.

9. Method according to either of Claims 6 and 7, in which said container is formed by excavation by hollowing out a solid block of material inside.

10. Method according to Claim 8, in which the molding of the container includes the steps consisting in:
- introducing the composition of material into the receptacle of a press of given shape;
- compressing said composition in the receptacle using said press;
- heating said receptacle if necessary.

11. Use of a water-soluble container whose wall defines a sealed internal volume capable of containing at least one dry additive for concrete, whose wall is at least partially rigid and porous and is made up of a material including at least one sand aggregate bonded by a water-soluble binder, for the manufacturing of a concrete by mixing of a sand aggregate and a cement, **characterized in that** said container is introduced into said mixture in such a way that the quantity of dry additive for concrete initially held in the container is incorporated in the concrete by dissolution of its wall.

12. Use of the container according to Claim 11, in which the sand aggregate has a particle size between 0.1 mm and 1.5 mm.

13. Use of the container according to Claim 11 or 12, in which the material constituting said at least partially rigid wall includes 98% sand and 2% of a water-soluble binder.

14. Use of the container according to any one of Claims 11 to 13, in which the water-soluble binder includes a polyvinyl alcohol.

15. Use of the container according to any one of Claims 11 to 14, in which the dry additive for concrete is made up of particles and/or fibers.
